# EUROPEAN PATENT SPECIFICATION

(11) **EP 3 076 649 B1**
(45) Date of publication and mention of the grant of the patent: **14.02.2018**
(21) Application number: 13900816.3
(22) Date of filing: 31.12.2013
(51) Int. Cl.: H04M 19/00

(54) **METHOD, DEVICE AND SYSTEM FOR ADJUSTING TELEPHONE CARRIED VOLTAGE**
VERFAHREN, VORRICHTUNG UND SYSTEM ZUR EINSTELLUNG EINER TELEFONSPANNUNG
PROCÉDÉ, DISPOSITIF, ET SYSTÈME D'AJUSTEMENT DE LA TENSION D'UN TÉLÉPHONE

(43) Date of publication of application: 05.10.2016
(73) Proprietor: Huawei Device Co., Ltd., Shenzhen, Guangdong 518129 (CN)
(72) Inventor: ZENG, Huarong, Shenzhen Guangdong 518129 (CN); LIU, Bingsen, Shenzhen Guangdong 518129 (CN); WEI, Qiwen, Shenzhen Guangdong 518129 (CN)
(74) Representative: Pfenning, Meinig & Partner mbB
(86) International application number: PCT/CN2013/091208
(87) International publication number: WO 2015/100659

(56) References cited:
- WO-A1-96/15617
- CN-A- 1 192 311
- CN-A- 1 794 738
- CN-A- 101 282 390
- US-A1- 2003 048 002
- US-A1- 2003 095 655
- US-A1- 2013 028 395

## Description

### TECHNICAL FIELD

The present invention relates to the communications field, and in particular, to a method and an apparatus for adjusting a voltage carried on a phone set, and a system.

### BACKGROUND

As a standard analog telephone service, a plain old telephone service (POTS) is a main component of telephone services for global family households and enterprises. A telephone switching system may supply electric energy to multiple phone sets, and a traditional voice circuit power supply system is generally of a separated type, that is, each phone set correspondingly uses an independent power supply system for power supply.

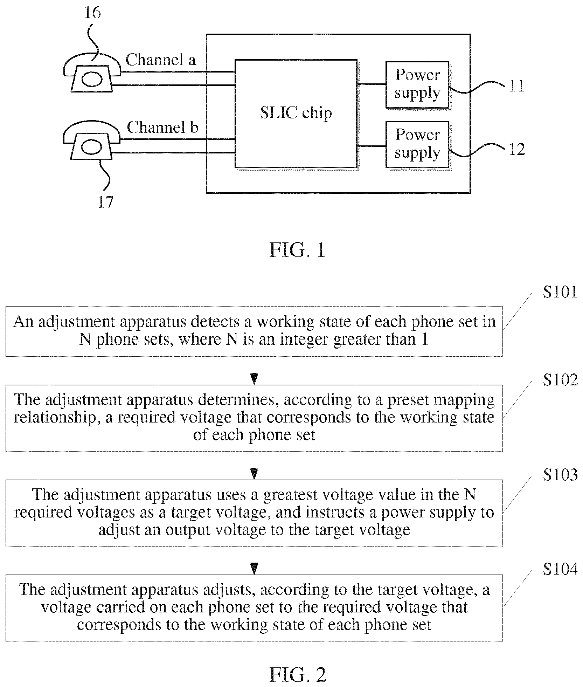

As shown in FIG. 1, FIG. 1 is a schematic structural diagram of a separated-type power supply system, in the system, two phone sets: a phone set 16 and a phone set 17, are schematically drawn, and a power supply 11 and a power supply 12 are two independent power supplies, where the power supply 11 supplies electric energy required during working to the phone set 16 by using a SLIC chip, the power supply 12 supplies electric energy required during working to the phone set 17 by using a SLIC, and the two phone sets are connected to the SLIC chip by using a Tip/Ring line respectively.

To sum up, multiple power supplies need to be used to supply power to multiple phone sets, so many power supply components are required. Therefore, the entire system has relatively high costs, and the SLIC chip needs to separately manage multiple power supply systems, which increases complexity of the system.

US 2003/0095655 A1 provides a subscriber line interface device in which a spacing factor and feeding efficiency of the low-voltage power supply are improved.

US 2013/0028395 A1 discloses a telephone switchboard providing various operating voltages to a telephone in different operation modes.

WO 96/15617 discloses an apparatus for automatically switching a load between different supply voltages in dependence on varying voltage demands of the load.

CN 1192311 A discloses a power supply having a plurality of single line interface circuits, each connected by respective lines to the corresponding telephone or other telecommunication devices. The apparatus comprises a common power adjustment means and a switch mode power supply unit.

CN 1794738 A discloses a power-supply circuit and a method for providing different voltages and a front feed device including a switch supply converter.

### SUMMARY

Embodiments of the present invention provide a method and an apparatus for adjusting a voltage carried on a phone set, and a system, where a working state of each phone set may be monitored, and a power supply is instructed to output a maximum voltage needed by a phone set, so that a function of supplying power to multiple phone sets by using only one power supply is implemented. Therefore, a quantity of power supplies and costs are greatly reduced.

A first aspect of the embodiments of the present invention provides a method for adjusting a voltage carried on a phone set, where N phone sets are connected to a power supply by using an adjustment apparatus, and the method includes:
detecting, by the adjustment apparatus, a working state of each phone set in the N phone sets, where N is an integer greater than 1;
determining, by the adjustment apparatus according to a preset mapping relationship, a required voltage that corresponds to the working state of each phone set;
using, by the adjustment apparatus, a largest voltage value in the N required voltages as a target voltage, and instructing the power supply to adjust an output voltage to the target voltage; and
adjusting, by the adjustment apparatus according to the target voltage, a voltage carried on each phone set to the required voltage that corresponds to the working state of each phone set. The step of the adjusting, by the adjustment apparatus according to the target voltage, a voltage carried on each phone set to the required voltage that corresponds to the working state of the phone set includes:
if it is detected that a phone set in an off-hook state dials, inputting, by the adjustment apparatus, a first voltage signal to a Tip line of the phone set in the off-hook state, and inputting a second voltage signal to a Ring line of the phone set in the off-hook state, where the first voltage signal and the second voltage signal have opposite phases and equal amplitudes.

In a first possible implementation manner, a working state of a phone set includes: an off-hook state, an on-hook state, or a ringing state.

With reference to the first aspect or the first possible implementation manner, in a second possible implementation manner, the power supply is a switch power supply, and the step of the instructing the power supply to adjust an output voltage to the target voltage includes:
sending, by the adjustment apparatus, a pulse width modulated PWM signal to the power supply, so that the power supply adjusts the output voltage to the target voltage according to the PWM signal.

With reference to any one of the first aspect to the second possible implementation manner, in a third possible implementation manner, the method further includes:
detecting, by the adjustment apparatus, an internal temperature of the adjustment apparatus; and
if the temperature exceeds a preset temperature threshold, adjusting, by the adjustment apparatus, the voltage carried on each phone set to zero.

A second aspect of the present invention provides an adjustment apparatus for adjusting a voltage carried on a phone set, including:
a detection module, configured to detect a working state of each phone set in N phone sets, where N is an integer greater than 1;
a query module, configured to determine, according to a preset mapping relationship, a required voltage that corresponds to the working state of each phone set;
an instruction module, configured to use a largest voltage value in the N required voltages as a target voltage, and instruct a power supply to adjust an output voltage to the target voltage; and
an adjustment module, configured to adjust, according to the target voltage, a voltage carried on each phone set to the required voltage that corresponds to the working state of each phone set.
The adjustment module is configured to: if it is detected that a phone set in an off-hook state dials, input a first voltage signal to a Tip line of the phone set in the off-hook state, and input a second voltage signal to a Ring line of the phone set in the off-hook state, where the first voltage signal and the second voltage signal have opposite phases and equal amplitudes.

In a first possible implementation manner, a working state of a phone set includes: an off-hook state, an on-hook state, the off-hook state, or a ringing state.

With reference to the second aspect or the first possible implementation manner, in a second possible implementation manner, the power supply is a switch power supply, and the instruction module is configured to send a pulse width modulated PWM signal to the power supply, so that the power supply adjusts the output voltage to the target voltage according to the PWM signal.

With reference to any one of the second aspect to the second possible implementation manner, in a third possible implementation manner, the adjustment apparatus further includes:
an over-temperature protection module, configured to detect an internal temperature of the adjustment apparatus; and if the temperature exceeds a preset temperature threshold, adjust the voltage carried on each phone set to zero.

A third aspect of the present invention provides a POTS communications system, including at least one phone set and any one of the foregoing adjustment apparatuses, where the phone set is connected to a power supply by using the adjustment apparatus.

A required voltage that corresponds to a working state of each phone set is queried for, a target voltage whose voltage value is the largest is determined from the required voltages, a power supply is instructed to adjust an output voltage to the target voltage, and a voltage carried on each phone set is adjusted, according to the target voltage, to the required voltage that corresponds to the working state of each phone set, so that power can be supplied to multiple phone sets by using one power supply. Therefore, a quantity of power supplies and costs are greatly reduced.

### BRIEF DESCRIPTION OF DRAWINGS

To describe the technical solutions in the embodiments of the present invention or in the prior art more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of a power supply circuit of a phone set according to the prior art;
FIG. 2 is a schematic flowchart of a method for adjusting a voltage carried on a phone set according to an embodiment of the present invention;
FIG. 3 is another schematic flowchart of a method for adjusting a voltage carried on a phone set according to an embodiment of the present invention;
FIG. 4 is a schematic structural diagram of an apparatus for adjusting a voltage carried on a phone set according to an embodiment of the present invention;
FIG. 5 is another schematic structural diagram of an apparatus for adjusting a voltage carried on a phone set according to an embodiment of the present invention;
FIG. 6 is still another schematic structural diagram of an apparatus for adjusting a voltage carried on a phone set according to an embodiment of the present invention; and
FIG. 7 is a schematic structural diagram of a POTS communications system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Refer to FIG. 1, which is a schematic flowchart of a method for adjusting a voltage carried on a phone set according to an embodiment of the present invention. In this embodiment, the method includes the following steps:

S101. An adjustment apparatus detects a working state of each phone set in N phone sets, where N is an integer greater than 1.

Specifically, a power supply is connected to the N phone sets by using the adjustment apparatus, where N is an integer greater than 1, and a working state of a phone set includes: an on-hook state, an off-hook state, and a ringing state.

For example, N=4, the power supply is connected, by using the adjustment apparatus, to four phone sets, which are separately a phone set 1, a phone set 2, a phone set 3, and a phone set 4, and initial working states of the four phone sets are all the on-hook state. The adjustment apparatus detects, by using a change value of a current between a Tip line and a Ring line of a phone set, a working state of the phone set at the moment, and impedances of the phone set in different working states are different. When the phone set is switched from one working state to another working state, the current, of the phone set, between the Tip line and the Ring line changes, and the adjustment apparatus determines the working state of the phone set by detecting the change value of the current between the Tip line and the Ring line.

It is assumed that the adjustment apparatus determines, by detecting a change value of a current, that a working state of the phone set 1 is the off-hook state, a working state of the phone set 2 is the ringing state, a working state of the phone set 3 is the off-hook state, and a working state of the phone set 4 is the off-hook state.

S102. The adjustment apparatus determines, according to a preset mapping relationship, a required voltage that corresponds to the working state of each phone set.

Specifically, the adjustment apparatus prestores a mapping relationship between a working state of a phone set and a required voltage. The mapping relationship between the working state and the required voltage is preset and saved as required, and the adjustment apparatus reads the saved mapping relationship when the adjustment apparatus works. The adjustment apparatus queries, according to the working state of each phone set that is detected in S101, for the corresponding required voltage.

For example, the mapping relationship is shown in Table 1:

**Table 1**

| Working state | off_hook | on_hook | ring |
|---|---|---|---|
| Required voltage | -24 V | -48 V | -90 V |

In Table 1, off_hook indicates that a phone set is in an off-hook state, and a corresponding required voltage *V_{off_hook}*=-24 V; on_hook indicates that the phone set is in an on-hook state, and a corresponding required voltage *V_{on_hook}*=-48 V; and ring indicates that the phone set is in a ringing state, and a corresponding required voltage *V_{ring}*=-90 V.

The adjustment apparatus finds, according to the working states of the four phone sets that are detected in S101, that a required voltage corresponding to the phone set 1 is -24 V, a required voltage corresponding to the phone set 2 is -90 V, a required voltage corresponding to the phone set 3 is -24 V, and a required voltage corresponding to the phone set 4 is -24 V.

S103. The adjustment apparatus uses a largest voltage value in the N required voltages as a target voltage, and instructs a power supply to adjust an output voltage to the target voltage.

Specifically, the adjustment apparatus selects a largest voltage value from the required voltages of the N phone sets that are found in S102 as the target voltage, and instructs the power supply to adjust the output voltage to the target voltage.

For example, it is found in S102 that the required voltage corresponding to the phone set 1 is -24 V, the required voltage corresponding to the phone set 2 is -90 V, the required voltage corresponding to the phone set 3 is -24 V, and the required voltage corresponding to the phone set 4 is -24 V. The adjustment apparatus determines that a target voltage whose voltage value is the largest is -90 V, and instructs the power supply to adjust the output voltage to -90 V.

S104. The adjustment apparatus adjusts, according to the target voltage, a voltage carried on each phone set to the required voltage that corresponds to the working state of each phone set.

Specifically, the adjustment apparatus uses the target voltage input by the power supply, and after performing voltage division processing on the target voltage by using a voltage-divider circuit, the adjustment apparatus makes the voltage carried on each phone set be the required voltage that corresponds to the working state of each phone set, where the voltage-divider circuit may be a resistance voltage-divider circuit or a MOS transistor voltage-divider circuit, which is not limited in the present invention.

Using the resistance voltage-divider circuit as an example, it is assumed that the output voltage of the power supply is -90 V. For an output port of the phone set 1, the adjustment apparatus adjusts a resistance value of the resistance voltage-divider circuit, so that the output voltage of the output port is -24 V; for an output port of the phone set 2, the adjustment apparatus directly loads the output voltage of the power supply to the phone set 2; for an output port of the phone set 3, the adjustment apparatus adjusts the resistance value of the resistance voltage-divider circuit, so that the output voltage of the output port is -24 V; and for an output port of the phone set 4, the adjustment apparatus adjusts the resistance value of the resistance voltage-divider circuit, so that the output voltage of the output port is -24 V.

By implementing this embodiment of the present invention, a required voltage that corresponds to a working state of each phone set is queried for, a target voltage whose voltage value is the largest is determined from the required voltages, a power supply is instructed to adjust an output voltage to the target voltage, and a voltage carried on each phone set is adjusted, according to the target voltage, to the required voltage that corresponds to the working state of each phone set, so that power can be supplied to multiple phone sets by using one power supply. Therefore, a quantity of power supplies and costs are greatly reduced.

Refer to FIG. 2, which is another schematic flowchart of a method for adjusting a voltage carried on a phone set according to an embodiment of the present invention. In this embodiment, the method includes:
S201. An adjustment apparatus detects a working state of each phone set in N phone sets, where N is an integer greater than 1.

Specifically, the adjustment apparatus prestores a mapping relationship between a working state of a phone set and a required voltage. The mapping relationship between the working state and the required voltage is preset and saved as required, and the adjustment apparatus reads the saved mapping relationship when the adjustment apparatus works. For example, the mapping relationship is shown in Table 2:

**Table 2**

| Working state | off_hook | on_hook | ring |
|---|---|---|---|
| Required voltage | -24 V | -48 V | -90 V |

In Table 2, off_hook indicates that a phone set is in an off-hook state, and a corresponding required voltage *V_{off_hook}*=-24 V; on_hook indicates that the phone set is in an on-hook state, and a corresponding required voltage *V_{on_hook}*=-48 V; and ring indicates that the phone set is in a ringing state, and a corresponding required voltage *V_{ring}*=-90 V.

A power supply is connected to the N phone sets by using the adjustment apparatus, where N is an integer greater than 1, and a working state of a phone set includes: an on-hook state, an off-hook state, and a ringing state.

For example, N=4, the power supply is connected, by using the adjustment apparatus, to four phone sets, which are separately a phone set 1, a phone set 2, a phone set 3, and a phone set 4, and initial working states of the four phone sets are all the on-hook state. The adjustment apparatus detects, by using a change value of a voltage drop between a Tip line and a Ring line of a phone set, a working state of the phone set at the moment. It is assumed that the adjustment apparatus detects that a working state of the phone set 1 is the off-hook state, a working state of the phone set 2 is the ringing state, a working state of the phone set 3 is the off-hook state, and a working state of the phone set 4 is the off-hook state.

S202. The adjustment apparatus determines, according to a preset mapping relationship, a required voltage that corresponds to the working state of each phone set.

The adjustment apparatus finds, in Table 2 according to the working states of the four phone sets that are detected in S201, that a required voltage corresponding to the phone set 1 is -24 V, a required voltage corresponding to the phone set 2 is -90 V, a required voltage corresponding to the phone set 3 is -24 V, and a required voltage corresponding to the phone set 4 is -24 V.

S203. The adjustment apparatus uses a largest voltage value in the N required voltages as a target voltage, and sends a pulse width modulated PWM (Pulse Width Modulation, pulse width modulated) signal to a power supply, so that the power supply adjusts an output voltage to the target voltage according to the PWM signal.

Specifically, the adjustment apparatus selects a largest voltage value from the required voltages of the N phone sets that are found in S101 as the target voltage, and instructs the power supply to adjust the output voltage to the target voltage.

For example, the power supply is a switch power supply, and it is found in S201 that a required voltage corresponding to the phone set 1 is -24 V, a required voltage corresponding to the phone set 2 is -90 V, a required voltage corresponding to the phone set 3 is -24 V, and a required voltage corresponding to the phone set 4 is -24 V. The adjustment apparatus determines that a target voltage whose voltage value is the largest is -90 V, the adjustment apparatus sends a PWM signal to the power supply, the power supply adjusts the output voltage to -90 V according to an indication of the PWM signal, and the adjustment apparatus implements adjusting of the output voltage of the power supply by controlling a duty cycle of the PWM signal.

S204. The adjustment apparatus adjusts, according to the target voltage, a voltage carried on each phone set to the required voltage that corresponds to the working state of each phone set.

Specifically, the adjustment apparatus uses the target voltage input by the power supply, and after performing voltage division processing on the target voltage by using a voltage-divider circuit, the adjustment apparatus makes the voltage carried on each phone set be the required voltage that corresponds to the working state of each phone set, where the voltage-divider circuit may be a resistance voltage-divider circuit or a MOS transistor voltage-divider circuit, which is not limited in the present invention.

Using the resistance voltage-divider circuit as an example, it is assumed that the output voltage of the power supply is -90 V. For an output port of the phone set 1, the adjustment apparatus adjusts a resistance value of the resistance voltage-divider circuit, so that the output voltage of the output port is -24 V; for an output port of the phone set 2, the adjustment apparatus directly loads the output voltage of the power supply to the phone set 2; for an output port of the phone set 3, the adjustment apparatus adjusts the resistance value of the resistance voltage-divider circuit, so that the output voltage of the output port is -24 V; and for an output port of the phone set 4, the adjustment apparatus adjusts the resistance value of the resistance voltage-divider circuit, so that the output voltage of the output port is -24 V.

Preferably, if it is detected that a phone set in the off-hook state dials, a first voltage signal is input to a Tip line of the phone set in the off-hook state, and a second voltage signal is input to a Ring line of the phone set in the off-hook state, where the first voltage signal and the second voltage signal have opposite phases and equal amplitudes. For example, two symmetrical sine wave signals or square wave signals are input, and a differential signal is input between the Tip line and the Ring line of the phone set, which can effectively reduce crosstalk interference caused by an electromagnetic effect to phone sets of adjacent lines.

S205. Detect an internal temperature of the adjustment apparatus according to a preset period, and if the temperature exceeds a preset temperature threshold, adjust the voltage carried on each phone set to 0.

Specifically, the adjustment apparatus detects, according to the preset period, the internal temperature of the adjustment apparatus, and if the temperature exceeds the preset temperature, turns off the output voltage that is output to each phone set.

For example, the preset temperature threshold is 175°C, and the adjustment apparatus detects that the internal temperature of the adjustment apparatus exceeds 175°C, and adjusts the voltage carried on each phone set to 0. When a next period arrives, if the adjustment apparatus detects that the internal temperature of the adjustment apparatus is less than 175°C, the adjustment apparatus turns on the output voltage again, so that the voltage carried on each phone set is a normal value. The adjustment apparatus has an over-temperature protection function, which can effectively avoid damage due to an excessively high temperature.

By implementing this embodiment of the present invention, a required voltage that corresponds to a working state of each phone set is queried for, a target voltage whose voltage value is the largest is determined from the required voltages, a power supply is instructed to adjust an output voltage to the target voltage, and a voltage carried on each phone set is adjusted, according to the target voltage, to the required voltage that corresponds to the working state of each phone set, so that power can be supplied to multiple phone sets by using one power supply. Therefore, a quantity of power supplies and costs are greatly reduced.

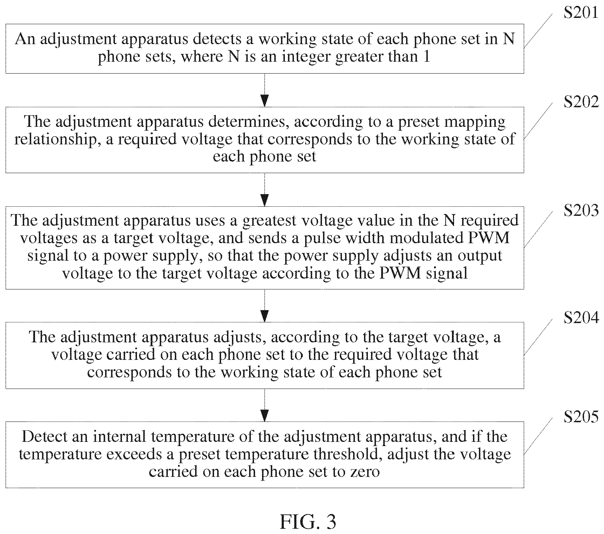

Refer to FIG. 3, which is a schematic structural diagram of an apparatus for adjusting a voltage carried on a phone set according to an embodiment of the present invention. In this embodiment, the apparatus includes:
a detection module 10, configured to detect a working state of each phone set in N phone sets, where N is an integer greater than 1;

Specifically, a power supply is connected to the N phone sets by using the adjustment apparatus, where N is an integer greater than 1, and a working state of a phone set includes: an on-hook state, an off-hook state, and a ringing state.

For example, N=4, the power supply is connected, by using the adjustment apparatus, to four phone sets, which are separately a phone set 1, a phone set 2, a phone set 3, and a phone set 4, and initial working states of the four phone sets are all the on-hook state. The detection module 10 detects, by using a change value of a current between a Tip line and a Ring line of a phone set, a working state of the phone set at the moment. It is assumed that the detection module 10 detects, according to a change value of a current, that a working state of the phone set 1 is the off-hook state, a working state of the phone set 2 is the ringing state, a working state of the phone set 3 is the off-hook state, and a working state of the phone set 4 is the off-hook state.
a query module 20, configured to determine, according to a preset mapping relationship, a required voltage that corresponds to the working state of each phone set;

Specifically, the adjustment apparatus stores a mapping relationship between a working state of a phone set and a required voltage, and the query module 20 queries for a corresponding required voltage according to the working state of each phone set that is detected by the detection module 10.

For example, the mapping relationship is shown in Table 3:

**Table 3**

| Working state | off_hook | on_hook | ring |
|---|---|---|---|
| Required voltage | -24 V | -48 V | -90 V |

In Table 3, off_hook indicates that a phone set is in an off-hook state, and a corresponding required voltage *V*_{*off_hook*=}-24 V; on_hook indicates that the phone set is in an on-hook state, and a corresponding required voltage *V_{on_hook}*=-48 V; and ring indicates that the phone set is in a ringing state, and a corresponding required voltage *V_{ring}*=-90 V.

The query module 20 finds, according to the working states of the four phone sets that are detected by the detection module 10, that a required voltage corresponding to the phone set 1 is -24 V, a required voltage corresponding to the phone set 2 is -90 V, a required voltage corresponding to the phone set 3 is -24 V, and a required voltage corresponding to the phone set 4 is -24 V.
an instruction module 30, configured to use a largest voltage value in the N required voltages as a target voltage, and instruct the power supply to adjust an output voltage to the target voltage; and

Specifically, the instruction module 30 selects a largest voltage value from the required voltages of the N phone sets that are found by the query module 20 as the target voltage, and instructs the power supply to adjust the output voltage to the target voltage.

For example, the query module 20 finds that the required voltage corresponding to the phone set 1 is -24 V, the required voltage corresponding to the phone set 2 is -90 V, the required voltage corresponding to the phone set 3 is -24 V, and the required voltage corresponding to the phone set 4 is -24 V. The instruction module 30 determines that a target voltage whose voltage value is the largest is -90 V, and instructs the power supply to adjust the output voltage to -90 V.
an adjustment module 40, configured to adjust, according to the target voltage, a voltage carried on each phone set to the required voltage that corresponds to the working state of each phone set.

Specifically, the adjustment apparatus uses the target voltage input by the power supply, and after performing voltage division processing on the target voltage, the adjustment apparatus makes the voltage carried on each phone set be the required voltage that corresponds to the working state of each phone set.

For example, the output voltage of the power supply is -90 V. For an output port of the phone set 1, the adjustment module 40 adjusts an output voltage of the output port to -24 V by using a voltage-divider circuit; for an output port of the phone set 2, the adjustment module 40 directly loads the output voltage of the power supply to the phone set 2; for an output port of the phone set 3, the adjustment module 40 adjusts an output voltage of the output port to -24 V by using the voltage-divider circuit; and for an output port of the phone set 4, the adjustment module 40 adjusts an output voltage of the output port to -24 V by using the voltage-divider circuit.

By implementing this embodiment of the present invention, a required voltage that corresponds to a working state of each phone set is queried for, a target voltage whose voltage value is the largest is determined from the required voltages, a power supply is instructed to adjust an output voltage to the target voltage, and a voltage carried on each phone set is adjusted, according to the target voltage, to the required voltage that corresponds to the working state of each phone set, so that power can be supplied to multiple phone sets by using one power supply. Therefore, a quantity of power supplies and costs are greatly reduced.

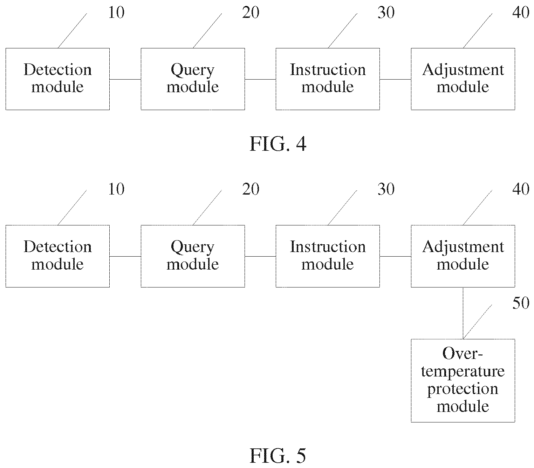

Refer to FIG. 4, which is another schematic structural diagram of an apparatus for adjusting a voltage carried on a phone set according to an embodiment of the present invention. In this embodiment, in addition to a detection module 10, a query module 20, an instruction module 30, and an adjustment module 40, the following is further included:
an over-temperature protection module 50, configured to detect an internal temperature of the adjustment apparatus; and if the temperature exceeds a preset temperature threshold, adjust the voltage carried on each phone set to zero.

Preferably, the instruction module 30 is configured to send a pulse width modulated PWM signal to the power supply, so that the power supply adjusts an output voltage to the target voltage according to the PWM signal.

The adjustment module 40 is configured to: if it is detected that a phone set in the off-hook state dials, input a first voltage signal to a Tip line of the phone set in the off-hook state, and input a second voltage signal to a Ring line of the phone set in the off-hook state, where the first voltage signal and the second voltage signal have opposite phases and equal amplitudes. For example, the adjustment module 40 inputs two symmetrical sine wave signals or square wave signals, so as to reduce crosstalk interference to phone sets of adjacent lines when dialing is performed.

This embodiment and Method Embodiment 2 belong to a same idea, and bring a same technical effect, for details, refer to descriptions in Method Embodiment 2, which is not described herein again.

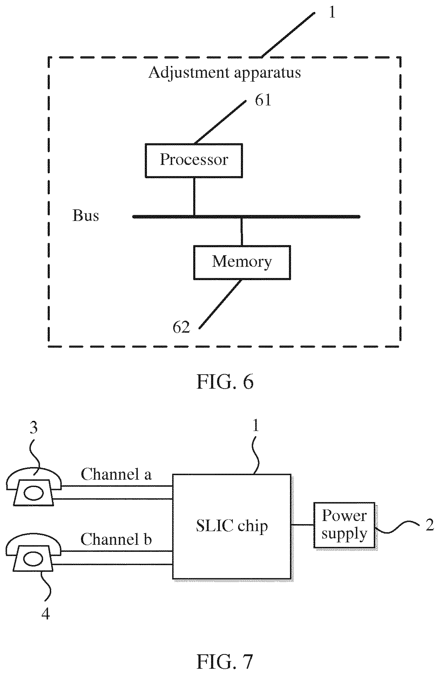

Refer to FIG. 6, which is still another schematic structural diagram of an apparatus for adjusting a voltage carried on a phone set according to an embodiment of the present invention. In this embodiment, the adjustment apparatus 1 includes a processor 61 and a memory 62, where there may be one or more processors 61 in the adjustment apparatus 1, and there may be one or more memories 62. In FIG. 6, as an example, there is one processor and one memory. In some embodiments of the present invention, the processor 61 and the memory 62 may be connected by using a bus or in other manners. In FIG. 6, as an example, connection is performed by using a bus.

The memory 62 stores a set of program code, and the processor 61 is configured to invoke the program code stored in the memory 62, and is configured to perform the following operations:
detecting a working state of each phone set in N phone sets, where N is an integer greater than 1;
determining, according to a preset mapping relationship, a required voltage that corresponds to the working state of each phone set;
using a largest voltage value in the N required voltages as a target voltage, and instructing a power supply to adjust an output voltage to the target voltage; and
adjusting, according to the target voltage, a voltage carried on each phone set to the required voltage that corresponds to the working state of each phone set.

Specifically, a power supply is connected to the N phone sets by using the adjustment apparatus, where N is an integer greater than 1, and a working state of a phone set includes: an on-hook state, an off-hook state, and a ringing state.

For example, N=4, the power supply is connected, by using the adjustment apparatus, to four phone sets, which are separately a phone set 1, a phone set 2, a phone set 3, and a phone set 4, and initial working states of the four phone sets are all the on-hook state. The processor 61 detects, by using a change value of a current between a Tip line and a Ring line of a phone set, a working state of the phone set at the moment, and impedances of the phone set in different working states are different. When the phone set is switched from one working state to another working state, the current, of the phone set, between the Tip line and the Ring line changes, and the processor 61 determines the working state of the phone set by detecting the change value of the current between the Tip line and the Ring line.

It is assumed that the processor 61 determines, by detecting a change value of a current, that a working state of the phone set 1 is the off-hook state, a working state of the phone set 2 is the ringing state, a working state of the phone set 3 is the off-hook state, and a working state of the phone set 4 is the off-hook state.

The memory 62 prestores a mapping relationship between a working state of a phone set and a required voltage, and the processor 61 queries, according to the detected working state of each phone set, for a corresponding required voltage from the memory 62.

For example, the mapping relationship is shown in Table 4:

**Table 4**

| Working state | off_hook | on_hook | ring |
|---|---|---|---|
| Required voltage | -24 V | -48 V | -90 V |

In Table 4, off_hook indicates that a phone set is in an off-hook state, and a corresponding required voltage *V_{off_hook}*=-24 V; on_hook indicates that the phone set is in an on-hook state, and a corresponding required voltage *V_{on_hook}*=-48 V; and ring indicates that the phone set is in a ringing state, and a corresponding required voltage *V_{ring}*=-90 V.

The processor 61 finds, according to the detected working states of the four phone sets, that a required voltage corresponding to the phone set 1 is -24 V, a required voltage corresponding to the phone set 2 is -90 V, a required voltage corresponding to the phone set 3 is -24 V, and a required voltage corresponding to the phone set 4 is -24 V.

The processor 61 finds, according to the mapping relationship stored in the memory 62, that the required voltage corresponding to the phone set 1 is -24 V, the required voltage corresponding to the phone set 2 is -90 V, the required voltage corresponding to the phone set 3 is -24 V, and the required voltage corresponding to the phone set 4 is -24 V. The adjustment apparatus determines that a target voltage whose voltage value is the largest is -90 V, and instructs the power supply to adjust the output voltage to -90 V.

The processor 61 uses the target voltage input by the power supply, and after performing voltage division processing on the target voltage by using a voltage-divider circuit, the processor 61 makes the voltage carried on each phone set be the required voltage that corresponds to the working state of each phone set, where the voltage-divider circuit may be a resistance voltage-divider circuit or a MOS transistor voltage-divider circuit, which is not limited in the present invention.

Using the resistance voltage-divider circuit as an example, it is assumed that the output voltage of the power supply is -90 V. For an output port of the phone set 1, the processor 61 adjusts a resistance value of the resistance voltage-divider circuit, so that the output voltage of the output port is -24 V; for an output port of the phone set 2, the processor 61 directly loads the output voltage of the power supply to the phone set 2; for an output port of the phone set 3, the processor 61 adjusts the resistance value of the resistance voltage-divider circuit, so that the output voltage of the output port is -24 V; and for an output port of the phone set 4, the processor 61 adjusts the resistance value of the resistance voltage-divider circuit, so that the output voltage of the output port is -24 V.

In some embodiments of the present invention, a working state of a phone set includes: an off-hook state, an on-hook state, or a ringing state.

In some embodiments of the present invention, the step, performed by the processor 61, of instructing the power supply to adjust an output voltage to the target voltage includes:
sending, by the processor 61, a pulse width modulated PWM signal to the power supply, so that the power supply adjusts the output voltage to the target voltage according to the PWM signal.

Specifically, the power supply is a switch power supply, and the processor 61 sends PWM signals having different duty cycles to the power supply to control the output voltage of the power supply.

In some embodiments of the present invention, the step, performed by the processor, of adjusting, according to the target voltage, a voltage carried on each phone set to the required voltage that corresponds to the working state of the phone set includes:
if it is detected that a phone set in an off-hook state dials, inputting a first voltage signal to a Tip line of the phone set in the off-hook state, and inputting a second voltage signal to a Ring line of the phone set in the off-hook state, where the first voltage signal and the second voltage signal have opposite phases and equal amplitudes.

In some embodiments of the present invention, the processor 61 is further configured to perform:
detecting an internal temperature of the adjustment apparatus; and if the temperature exceeds a preset temperature threshold, adjusting the voltage carried on each phone set to zero.

By implementing this embodiment of the present invention, a required voltage that corresponds to a working state of each phone set is queried for, a target voltage whose voltage value is the largest is determined from the required voltages, a power supply is instructed to adjust an output voltage to the target voltage, and a voltage carried on each phone set is adjusted, according to the target voltage, to the required voltage that corresponds to the working state of each phone set, so that power can be supplied to multiple phone sets by using one power supply. Therefore, a quantity of power supplies and costs are greatly reduced.

Refer to FIG. 7, which is a schematic structural diagram of a POTS (Plain Old Telephone Service, plain old telephone service) communications system according to an embodiment of the present invention. In this embodiment, the communications system includes two phone sets (a phone set 3 and a phone set 4), a SLIC (Subscriber Line Interface Circuit, Subscriber Line Interface Circuit) chip 1 used as an adjustment apparatus, and two phone sets are connected to a power supply by using the SLIC chip.

A working principle of the system is as follows: The power supply 2 is connected to the two phone sets by using the SLIC chip 1; the SLIC chip 1 detects a working state of each phone set in the two phone sets, queries, according to a preset mapping relationship, for a required voltage that corresponds to the working state of each phone set, determines that a greater voltage value in the two required voltages is used as a target voltage, and instructs the power supply 2 to adjust an output voltage to the target voltage; and the SLIC chip 1 adjusts, according to the target voltage, a voltage carried on each phone set to the required voltage that corresponding to the working state of each phone set.

By implementing this embodiment of the present invention, a required voltage that corresponds to a working state of each phone set is queried for, a target voltage whose voltage value is the largest is determined from the required voltages, a power supply is instructed to adjust an output voltage to the target voltage, and a voltage carried on each phone set is adjusted, according to the target voltage, to the required voltage that corresponds to the working state of each phone set, so that power can be supplied to multiple phone sets by using one power supply. Therefore, a quantity of power supplies and costs are greatly reduced.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The embodiments of the present invention are described in detail above. The principle and implementation manners of the present invention are described herein through specific examples. The description about the embodiments of the present invention is merely provided to help understand the method and core ideas of the present invention. In addition, a person of ordinary skill in the art can make variations and modifications to the present invention in terms of the specific implementations and application scopes according to the ideas of the present invention. Therefore, the content of specification shall not be construed as a limit to the present invention.

## Claims

1. A method for adjusting a voltage carried on a phone set, wherein N phone sets are connected to a power supply by using an adjustment apparatus, and the method comprises:
detecting, by the adjustment apparatus, a working state of each phone set in the N phone sets, wherein N is an integer greater than 1 (S101);
determining, by the adjustment apparatus according to a preset mapping relationship, a required voltage that corresponds to the working state of each phone set (S102);
using, by the adjustment apparatus, a largest voltage value in the N required voltages as a target voltage, and instructing the power supply to adjust an output voltage to the target voltage (S103); and
adjusting, by the adjustment apparatus according to the target voltage, a voltage carried on each phone set to the required voltage that corresponds to the working state of each phone set (S104),
wherein the step of the adjusting, by the adjustment apparatus according to the target voltage, a voltage carried on each phone set to the required voltage that corresponds to the working state of the phone set comprises:
if it is detected that a phone set in an off-hook state dials, inputting, by the adjustment apparatus, a first voltage signal to a Tip line of the phone set in the off-hook state, and inputting a second voltage signal to a Ring line of the phone set in the off-hook state, wherein the first voltage signal and the second voltage signal have opposite phases and equal amplitudes.

2. The method according to claim 1, wherein a working state of a phone set comprises: an off-hook state, an on-hook state, or a ringing state.

3. The method according to claim 1 or 2, wherein the power supply is a switch power supply, and the step of the instructing the power supply to adjust an output voltage to the target voltage comprises:
sending, by the adjustment apparatus, a pulse width modulation PWM signal to the power supply, so that the power supply adjusts the output voltage to the target voltage according to the PWM signal.

4. The method according to any one of claims 1 to 3, further comprising:
detecting, by the adjustment apparatus, an internal temperature of the adjustment apparatus; and
if the temperature exceeds a preset temperature threshold, adjusting, by the adjustment apparatus, the voltage carried on each phone set to zero.

5. An adjustment apparatus for adjusting a voltage carried on a phone set, comprising:
a detection module (10), configured to detect a working state of each phone set in N phone sets, wherein N is an integer greater than 1;
a query module (20), configured to determine, according to a preset mapping relationship, a required voltage that corresponds to the working state of each phone set;
an instruction module (30), configured to use a largest voltage value in the N required voltages as a target voltage, and instruct a power supply to adjust an output voltage to the target voltage; and
an adjustment module (40), configured to adjust, according to the target voltage, a voltage carried on each phone set to the required voltage that corresponds to the working state of each phone set,
wherein the adjustment module (40) is configured to: if it is detected that a phone set in an off-hook state dials, input a first voltage signal to a Tip line of the phone set in the off-hook state, and input a second voltage signal to a Ring line of the phone set in the off-hook state, wherein the first voltage signal and the second voltage signal have opposite phases and equal amplitudes.

6. The adjustment apparatus according to claim 5, wherein a working state of a phone set comprises: an off-hook state, an on-hook state, or a ringing state.

7. The adjustment apparatus according to claim 5 or 6, wherein the power supply is a switch power supply, and the instruction module is configured to send a pulse width modulated PWM signal to the power supply, so that the power supply adjusts the output voltage to the target voltage according to the PWM signal.

8. The adjustment apparatus according to any one of claims 5 to 7, further comprising:
an over-temperature protection module (50), configured to detect an internal temperature of the adjustment apparatus; and if the temperature exceeds a preset temperature threshold, adjust the voltage carried on each phone set to zero.

9. A POTS communications system, comprising at least one phone set (3, 4) and the adjustment apparatus (1) according to any one of claims 5 to 8, wherein the phone set (3, 4) is connected to a power supply (2) by using the adjustment apparatus (1).

## Patentansprüche

1. Verfahren zum Anpassen einer Spannung, die auf einem Telefonapparat geführt wird, wobei N Telefonapparate unter Verwendung einer Anpassvorrichtung mit einer Stromversorgung verbunden sind, und das Verfahren die folgenden Schritte umfasst:
Detektieren, durch die Anpassvorrichtung, eines Arbeitsstatus von jedem Telefonapparat in den N Telefonapparaten, wobei N eine ganze Zahl größer als 1 ist (S101);
Bestimmen, durch die Anpassvorrichtung gemäß einer voreingestellten Abbildungsbeziehung, einer erforderlichen Spannung, die dem Arbeitsstatus von jedem Telefonapparat entspricht (S102);
Verwenden, durch die Anpassvorrichtung, eines größten Spannungswerts in den N erforderlichen Spannungen als eine Zielspannung und Anweisen der Stromversorgung, eine Ausgangsspannung an die Zielspannung anzupassen (103); und
Anpassen, durch die Anpassvorrichtung gemäß der Zielspannung, einer Spannung, die auf jedem Telefonapparat geführt wird, an die erforderliche Spannung, die dem Arbeitsstatus jedes Telefonapparats entspricht (S104),
wobei der Schritt des Anpassens, durch die Anpassvorrichtung gemäß der Zielspannung, einer Spannung, die auf jedem Telefonapparat geführt wird, an die erforderliche Spannung, die dem Arbeitsstatus des Telefonapparats entspricht, die folgenden Schritte umfasst:
wenn detektiert wird, dass ein Telefonapparat im abgenommenen Status wählt, Eingeben, durch die Anpassvorrichtung, eines ersten Spannungssignals auf eine Spitzen-Leitung des Telefonapparats im abgenommenen Status und Eingeben eines zweiten Spannungssignals auf eine Ringleitung des Telefonapparats im abgenommenen Status, wobei das erste Spannungssignal und das zweite Spannungssignal entgegengesetzte Phasen und gleiche Amplituden aufweisen.

2. Verfahren nach Anspruch 1, wobei ein Arbeitsstatus eines Telefonapparats die Folgenden umfasst:
einen abgenommenen Status, einen aufgelegten Status oder einen Klingelstatus.

3. Verfahren nach Anspruch 1 oder Anspruch 2, wobei die Stromversorgung eine Umschaltstromversorgung ist und der Schritt des Anweisens der Stromversorgung, eine Ausgangsspannung an den Zielwert anzupassen, Folgendes umfasst:
Senden, durch die Anpassvorrichtung, eines pulsweiten-modulierten Signals bzw. PWM-Signals an die Stromversorgung, so dass die Stromversorgung die Ausgangsspannung gemäß dem PWM-Signal an die Zielspannung anpasst.

4. Verfahren nach einem der Ansprüche 1 bis 3, das ferner die folgenden Schritte umfasst:
Detektieren, durch die Anpassvorrichtung, einer Innentemperatur der Anpassvorrichtung; und
falls die Temperatur eine voreingestellte Temperaturschwelle übersteigt, Anpassen, durch die Anpassvorrichtung, der auf jedem Telefonapparat geführten Spannung auf null.

5. Anpassvorrichtung zum Anpassen einer Spannung, die auf jedem Telefonapparat geführt wird, Folgendes umfassend:
ein Detektionsmodul (10), ausgelegt zum Detektieren eines Arbeitsstatus von jedem Telefonapparat in N Telefonapparaten, wobei N eine ganze Zahl größer als 1 ist;
ein Anfragemodul (20), ausgelegt zum Bestimmen, gemäß einer voreingestellten Abbildungsbeziehung, einer erforderlichen Spannung, die dem Arbeitsstatus von jedem Telefonapparat entspricht;
ein Anweisungsmodul (30), ausgelegt zum Verwenden eines größten Spannungswerts in den N erforderlichen Spannungen als eine Zielspannung und Anweisen einer Stromversorgung, eine Ausgangsspannung an die Zielspannung anzupassen; und
ein Anpassmodul (40), ausgelegt zum Anpassen, gemäß der Zielspannung, einer Spannung, die auf jedem Telefonapparat geführt wird, auf die erforderliche Spannung, die dem Arbeitsstatus jedes Telefonapparats entspricht,
wobei das Anpassmodul (40) ausgelegt ist zum: wenn detektiert wird, dass ein Telefonapparat im abgenommenen Status wählt, Eingeben, eines ersten Spannungssignals auf eine Spitzen-Leitung des Telefonapparats im abgenommenen Status und Eingeben eines zweiten Spannungssignals auf eine Ringleitung des Telefonapparats im abgenommenen Status, wobei das erste Spannungssignal und das zweite Spannungssignal entgegengesetzte Phasen und gleiche Amplituden aufweisen.

6. Anpassvorrichtung nach Anspruch 5, wobei ein Arbeitsstatus eines Telefonapparats die Folgenden umfasst:
einen abgenommenen Status, einen aufgelegten Status oder einen Klingelstatus.

7. Anpassvorrichtung nach Anspruch 5 oder 6, wobei die Stromversorgung eine Umschaltstromversorgung ist und das Anweisungsmodul ausgelegt ist zum Senden eines pulsweiten-modulierten Signals bzw. PWM-Signals an die Stromversorgung, so dass die Stromversorgung die Ausgangsspannung gemäß dem PWM-Signal an die Zielspannung anpasst.

8. Anpassvorrichtung nach einem der Ansprüche 5 bis 7, die ferner Folgendes umfasst: ein Übertemperaturschutzmodul (50), ausgelegt zum Detektieren einer Innentemperatur der Anpassvorrichtung; und, falls die Temperatur eine voreingestellte Temperaturschwelle übersteigt, Anpassen der auf jedem Telefonapparat geführten Spannung auf null.

9. POTS-Kommunikationssystem, das mindestens einen Telefonapparat (3, 4) und die Anpassvorrichtung (1) nach einem der Ansprüche 5 bis 8 umfasst, wobei der Telefonapparat (3, 4) unter Verwendung der Anpassvorrichtung (1) mit einer Stromversorgung (2) verbunden ist.

## Revendications

1. Procédé pour régler une tension portée sur un téléphone, dans lequel N téléphones sont connectés à une alimentation électrique en utilisant un appareil de réglage, et le procédé comprenant :
la détection, par l'appareil de réglage, d'un état de fonctionnement de chaque téléphone parmi les N téléphones, N étant un nombre entier plus grand que 1 (S101) ;
la détermination, par l'appareil de réglage, conformément à un rapport de mise en correspondance préréglé, d'une tension requise qui correspond à l'état de fonctionnement de chaque téléphone (S102) ;
l'utilisation, par l'appareil de réglage, d'une valeur de tension la plus grande parmi les N tensions requises comme tension cible, et la demande à l'alimentation électrique de régler une tension de sortie sur la tension cible (S 103) ; et
le réglage, par l'appareil de réglage, conformément à la tension cible, d'une tension portée sur chaque téléphone sur la tension requise qui correspond à l'état de fonctionnement de chaque téléphone (S 104),
dans lequel l'étape du réglage, par l'appareil de réglage, conformément à la tension cible, d'une tension portée sur chaque téléphone réglé sur la tension requise qui correspond à l'état de fonctionnement du téléphone comprend :
s'il est détecté qu'un téléphone dans un état décroché compose un numéro, l'entrée, par l'appareil de réglage, d'un premier signal de tension dans une ligne d'extrémité du téléphone dans l'état décroché, et l'entrée d'un deuxième signal de tension dans une ligne d'anneau du téléphone dans l'état décroché, le premier signal de tension et le deuxième signal de tension ayant des phases opposées et des amplitudes égales.

2. Procédé selon la revendication 1, dans lequel un état de fonctionnement d'un téléphone comprend : un état décroché, un état raccroché, ou un état de sonnerie.

3. Procédé selon la revendication 1 ou 2, dans lequel l'alimentation électrique est une alimentation électrique à découpage, et dans lequel l'état consistant à demander à l'alimentation électrique de régler une tension de sortie sur la tension cible comprend :
l'envoi, par l'appareil de réglage, d'un signal de modulation d'impulsions en durée PWM à l'alimentation électrique, de manière à ce que l'alimentation électrique règle la tension de sortie sur la tension cible conformément au signal PWM.

4. Procédé selon l'une quelconque des revendications 1 à 3, comprenant en outre :
la détection, par l'appareil de réglage, d'une température interne de l'appareil de réglage ; et
si cette température dépasse un seuil de température préréglé, le réglage, par l'appareil de réglage, de la tension portée sur chaque téléphone sur zéro.

5. Appareil de réglage pour régler une tension portée sur un téléphone, comprenant :
un module de détection (10), configuré de façon à détecter un état de fonctionnement de chaque téléphone parmi N téléphones, N étant un nombre entier plus grand que 1 ;
un module d'interrogation (20), configuré de façon à déterminer, conformément à un rapport de mise en correspondance préréglé, une tension requise qui correspond à l'état de fonctionnement de chaque téléphone ;
un module de demande (30), configuré de façon à utiliser une valeur de tension la plus grande parmi les N tensions requises comme tension cible, et à demander à une alimentation électrique de régler une tension de sortie sur la tension cible ; et
un module de réglage (40), configuré de façon à régler, conformément à la tension cible, une tension portée sur chaque téléphone sur la tension requise qui correspond à l'état de fonctionnement de chaque téléphone,
dans lequel le module de réglage (40) est configuré de façon à : s'il est détecté qu'un téléphone dans un état décroché compose un numéro, entrer un premier signal de tension dans une ligne d'extrémité du téléphone dans l'état décroché, et à entrer un deuxième signal de tension dans une ligne d'anneau du téléphone dans l'état décroché, le premier signal de tension et le deuxième signal de tension ayant des phases opposées et des amplitudes égales.

6. Appareil de réglage selon la revendication 5, dans lequel un état de fonctionnement d'un téléphone comprend : un état décroché, un état raccroché, ou un état de sonnerie.

7. Appareil de réglage selon la revendication 5 ou 6, dans lequel l'alimentation électrique est une alimentation électrique à découpage, et le module de demande est configuré de façon à envoyer un signal de modulation d'impulsions en durée PWM à l'alimentation électrique, de manière à ce que l'alimentation électrique règle la tension de sortie sur la tension cible conformément au signal PWM.

8. Appareil de réglage selon l'une quelconque des revendications 5 à 7, comprenant en outre :
un module de protection contre une température excessive (50), configuré de façon à détecter une température interne de l'appareil de réglage ; et si cette température dépasse un seuil de température préréglé, à régler la tension portée sur chaque téléphone sur zéro.

9. Système de communication STO, comprenant au moins un téléphone (3, 4) et l'appareil de réglage (1) selon l'une quelconque des revendications 5 à 8, dans lequel le téléphone (3, 4) est connecté à une alimentation électrique (2) en utilisant l'appareil de réglage (1).
